# EUROPEAN PATENT SPECIFICATION

(11) **EP 4 526 586 B1**
(45) Date of publication and mention of the grant of the patent: **30.09.2026**
(21) Application number: 23757694.7
(22) Date of filing: 16.07.2023
(51) Int. Cl.: F17C 1/00, F17C 1/02

(54) **STORAGE AND REUSE OF HYDROGEN AND OXYGEN PRODUCED BY GREEN ENERGY IN GROUNDWATER**
LAGERUNG UND WIEDERVERWENDUNG VON DURCH GRÜNE ENERGIE IN GRUNDWASSER ERZEUGTEM WASSERSTOFF UND SAUERSTOFF
STOCKAGE ET RÉUTILISATION D'HYDROGÈNE ET D'OXYGÈNE PRODUITS PAR DE L'ÉNERGIE VERTE DANS DE L'EAU SOUTERRAINE

(30) Priority: 17.05.2022 HU 2200161
(43) Date of publication of application: 26.03.2025
(73) Proprietor: Palkovics, Milán Dániel, 2400 Dunaújváros (HU); Györbíró, Károly, 1238 Budapest (HU); Kátai, Attila, 1182 Budapest (HU); Meleghegyi, András, 2220 Vecsés (HU)
(72) Inventor: HARSÁNYI, Dániel, 1132 Budapest (HU); MELEGHEGYI, András, 2220 Vecsés (HU)
(74) Representative: Danubia Patent & Law Office LLC
(86) International application number: PCT/IB2023/057256
(87) International publication number: WO 2023/223304

(56) References cited:
- JP-A- 2006 265 850
- US-A1- 2011 274 492
- US-A1- 2014 261 132
- US-A1- 2020 003 365

## Description

### Field of the invention

The invention is a hydrogen and/or oxygen storage system, a storage apparatus, that uses groundwater as an energy storage facility.

### State of the art

Hydrogen is widely known as an energy carrier and is currently stored in a variety of ways. Such solutions allow solar energy to be stored and converted back when solar energy is not available.

Storage plays a critical role in the use of hydrogen for energy. Current common storage processes are implemented as gaseous, liquid or simple hybrids.

By 2050, human energy demand is estimated to triple compared to the millennium, making the exploration of alternative energy sources increasingly urgent and essential.

One of the key issues to be addressed is to drastically reduce greenhouse CO2 emissions. In the last two decades, there has been a lot of interest in the integration of hydrogen into the energy sector, which could be the basis for building a hydrogen-based energy economy.

The concept is to use hydrogen produced from different alternative energy sources (solar, geothermal, wind, biomass, etc.) in so-called fuel cells, in which an electrochemical reaction converts the chemical energy stored in the hydrogen into electrical energy.

Since the hydrogen generated can be both spatially and temporally distant from the place of use, it must be stored.

Japanese Published Patent Appl. No. 2006/265850 A - regarded as the closest prior art - discloses a method and an apparatus to effectively and stably separate and extract natural gas contained in groundwater, in a well for pumping the groundwater that contains natural gas. Said well is inserted into an underground layer wherein water-soluble natural gas naturally occurs, so as to be used for separating and extracting the natural gas from the groundwater containing the natural gas. The well comprises an outer pipe, which is equipped with a slit for taking in the groundwater, and an inner pipe having a diameter smaller than that of the outer pipe. The lowermost part of the inner pipe is positioned above that of the outer pipe. A ground-section hole opening of the inner pipe and that of the outer pipe are each sealed. The inner pipe is equipped with means for reducing and adjusting pressure in the inner pipe. The outer pipe is provided with adjusting means for keeping the inside of the outer pipe at a normal pressure.

The invention aims at providing a low-cost solution for the intermittent storage of energy in hydrogen along with minimizing maintenance and servicing costs, whether for domestic or large power plants.

### Bried description of the invention

The additional objectives which can be understood or deduced from the above and the remainder of the present disclosure have been addressed by an apparatus according to claim 1, preferred embodiments of which are defined in claims 2 to 4.

### Brief description of the drawing

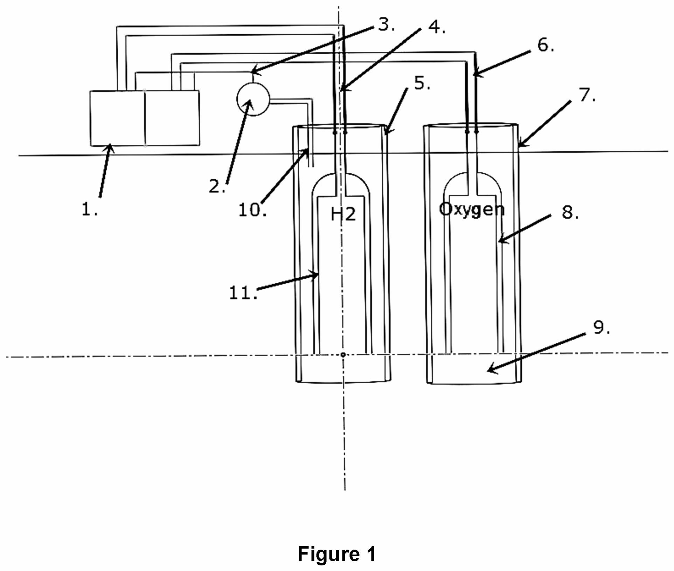

Figure 1 schematically illustrates a preferred exemplary embodiment of an apparatus according to the invention.

### Detailed description of the invention

The apparatus according to the invention is particularly suitable for installation in areas where the soil can be drilled without significant costs using conventional well drilling techniques and groundwater can be extracted.

For one practical embodiment of the invention, one or more wells 5, 7, each preferably 310 mm or more in diameter, are drilled using conventional technology, the depth(s) of which is/are preferably always the maximum depth that can be drilled in the field from an economic point of view. As shown in Figure 1, a vessel or a cartridge 11, 8 closed at the top and sides but open at the bottom is installed in each well 5, 7 below the level of groundwater 9 in the respective well 5, 7, at a safe distance below said level of groundwater 9, Said cartridge is preferably fixed to the side of the well 5, 7. The 11, 8 cartridges are held in a central position within the well 5, 7 by spacers.

A rated circulating pump 2 is installed in one of the wells 5 of the well system prepared. The circulating pump 2 will circulate the water from the well 5 through a suction pipe 10 relative to the water level in the well 5 from a safe depth into and through a two-chamber electrolysis tank 1 forming an electrolyzer, known to a skilled artisan, in such a way that two closed water systems 3 are formed upstream said tank1 by branching said suction pipe 10 in two directions.

Water pipes 4, 6 returning from the electrolysis tank 1 to the wells 5, 7, respectively, are each connected to a top connection point of the cartridges 11 and 8 arranged in the well 5 (for hydrogen) and the well 7 (for oxygen), respectively. At a top section of each of the cartridges 11, 8 for hydrogen and oxygen, respectively, at a connection point of the corresponding return water pipes 4, 6, the pipe cross-section increases, which allows the gas/gases to be trapped below the water level.

The two closed water systems 3, which get formed when the circulating pump 2 is primed and which suck up the water from the well 5, return the water that has been at least partially electrolyzed through the electrolysis tank 1 to the cartridges 11, 8 in the wells 5, 7. Circulation is continuous.

Start-up and energy recovery of the system are controlled by appropriate electronics.

When green energy, preferably produced by solar panels, wind generators, etc., is available, a direct (DC) current provided by said green energy is fed to negative and positive points of the electrolysis tank 1. In the electrolysis tank 1, hydrogen and oxygen are generated by the DC current by means of the well-known electrolysis process of water under continuous circulation of water. Since the electrode arranged in the electrolysis tank 1 is a perforated stainless-steel plate, the gases formed, in the form of bubbles, are carried away by the water stream from the corresponding (i.e., positive or negative) side of the tank 1 through the return pipes 4, 6 to the corresponding cartridge 11, 8, where said gases get separated from the water.

In the cartridge 11, 8, the increased cross-section causes hydrogen and oxygen, respectively, to accumulate and thus the gases start to displace the groundwater from the hydrogen/oxygen cartridge. Since the water flow is continuous, the gases cannot oppose the water and continuously accumulate in the cartridges 11, 8. As the amount of gas accumulating increases, the groundwater 9 flows continuously out from the cartridges 11, 8 into the bottom of the wells 5, 7.

When a cartridge 11, 8 fully fills with gas, the system switches to the next cartridge in the next well using a suitable interposed valve system known to the skilled artisan.

The gas (i.e., hydrogen or oxygen) trapped in the cartridges 11, 8 of the wells 5, 7 is compressed by the pressure of the groundwater 9 corresponding to the depth of the well, allowing an easy recovery of the gas and thus its subsequent use.

As the system has very few moving parts and the pressure is maintained by the soil structure, the storage apparatus according to the invention requires minimal maintenance.

The invention primarily converts recovered hydrogen into electricity using a fuel cell, but it can also be used to power a hydrogen turbine or to use the recovered hydrogen and oxygen in other ways. It is also clear to the skilled artisan that the storage apparatus according to the invention is suitable for both the storage and the subsequent use of such gases other than hydrogen and oxygen which do not react with water.

### Summary

The invention provides a solution for temporary storage of hydrogen and oxygen produced, for example, from green energy, at a significantly lower cost than existing solutions. The apparatus consists of a single circulating water pump, and therefore both construction and operating costs are much lower than for conventional gas storage solutions.

As the depth of the wells increases, the pressure of the stored gas can be adjusted due to the increase in hydrostatic pressure; thus, recovery is also simple and does not generate further costs.

When filling the wells with gas, only the energy consumption of the circulating pump should be taken into account, and it is therefore significantly cheaper than other systems with tank.

Because of the pressure due to surrounding ground and the hydrostatic pressure, no loss of the pressure holding capacity of the tanks over time appears because the gas cartridges are not subject to extreme pressure changes - therefore they have a long lifetime.

With the solution according to the invention, a significant amount of gas can be stored in an area of suitable soil structure and recovered in a suitable period of time when there is a need for it.

### List of reference symbols

1 (electrolysis) tank
2 circulating pump
3 (closed) water system
4 pipe (for return water mixed with hydrogen)
5 well
6 pipe (for return water mixed with oxygen)
7 well
8 (internal oxygen) cartridge
9 groundwater
10 suction pipe (of the circulating pump)
11 (internal hydrogen) cartridge

## Claims

1. A storage system for underground storage of gas, in particular hydrogen and/or oxygen, the system comprising:
- an energy source;
- an electrolyzer for water electrolysis using energy of said energy source, the electrolyzer having two chambers, an anode chamber and a cathode chamber,
the anode chamber being configured to accommodate oxidation reaction of water thereby producing oxygen therein and equipped with a first inlet and a first outlet; the cathode chamber being configured to accommodate reduction reaction of water thereby producing hydrogen therein and equipped with a second inlet and a second outlet;
- at least two wells (5, 7), each of said wells (5, 7) comprising
an interior filled with groundwater (9) up to a level of groundwater (9), and
a cartridge (11, 8) having a closed end, an open end opposite to the closed end and a closed side extending between said ends, the side and the ends forming a cartridge chamber;
said cartridge (11, 8) being fixed into the interior of the well (5, 7) under the level of groundwater (9) in a position in which the closed end is located closer to the level of groundwater (9) than the open end;
- a circulating pump (2) with a pump inlet and a pump outlet, said pump inlet being in fluid communication with the interior of one of the wells (5, 7) through a pipe (10) terminating under the level of groundwater (9), said pump outlet being in fluid communication with the first inlet of said anode chamber and the second inlet of said cathode chamber through a pipe (3); and to form a closed water circulation system,
the first outlet of said anode chamber is in fluid communication with the cartridge chamber of one of said cartridges (8) through a pipe (6) passing through the closed end of the respective cartridge (8), and
the second outlet of said cathode chamber is in fluid communication with the cartridge chamber of the other one of said cartridges (11) through a pipe (4) passing through the closed end of the respective cartridge (11);
wherein each of the cartridges (8, 11) is configured to store one of gaseous hydrogen and oxygen produced by the electrolyzer, in use, against a hydrostatical pressure of groundwater (9) in the respective well (5, 7).

2. The storage system according to claim 1, **characterized in that** the energy source is an alternative energy source selected from a group consisting of solar plants, geothermal plants, wind farms, biomass plants.

3. The storage system according to any one of claims 1 to 2, **characterized in that** the well (5, 7) is a drilled well or a dug well.

4. The storage system according to any of claims 1 to 3, **characterized in that** each pipe (4, 6) passing through the closed end of the cartridge (11, 8) is formed with an increase in cross-section within the cartridge (11, 8) so as to allow any of gaseous hydrogen and oxygen to be trapped in the respective cartridge (11, 8) below the level of groundwater (9) in the respective well (5, 7).

## Patentansprüche

1. Ein Speichersystem zur unterirdischen Speicherung von Gas, insbesondere Wasserstoff und/oder Sauerstoff, wobei das System umfasst:
- eine Energiequelle;
- einen Elektrolyseur für Wasserelektrolyse unter Verwendung der Energie der genannten Energiequelle, wobei der Elektrolyseur zwei Kammern, eine Anodenkammer und eine Kathodenkammer aufweist, wobei
die Anodenkammer für die Aufnahme einer Oxidationsreaktion von Wasser ausgelegt ist, wodurch darin Sauerstoff erzeugt wird, und mit einem ersten Einlass und einem ersten Auslass ausgestattet ist;
die Kathodenkammer für die Aufnahme einer Reduktionsreaktion von Wasser ausgelegt ist, wodurch darin Wasserstoff erzeugt wird, und mit einem zweiten Einlass und einem zweiten Auslass ausgestattet ist;
- mindestens zwei Brunnen (5, 7), wobei jeder der Brunnen (5, 7) aufweist
einen Innenraum, der bis zu einem Grundwasserspiegel (9) mit Grundwasser (9) gefüllt ist, und
eine Kartusche (11, 8) mit einem geschlossenen Ende, einem dem geschlossenen Ende gegenüberliegenden offenen Ende und einer geschlossenen Seite, die sich zwischen den Enden erstreckt, wobei die Seite und die Enden eine Kartuschenkammer bilden;
wobei die Kartusche (11, 8) im Inneren des Brunnens (5, 7) unterhalb des Grundwasserspiegels (9) in einer Position befestigt ist, in der das geschlossene Ende näher am Grundwasserspiegel (9) liegt als das offene Ende;
- eine Umwälzpumpe (2) mit einem Pumpeneinlass und einem Pumpenauslass, wobei der Pumpeneinlass über eine unterhalb des Grundwasserspiegels (9) endende Leitung (10) in Fluidverbindung mit dem Inneren eines der Brunnen (5, 7) steht und der Pumpenauslass über eine Leitung (3) in Fluidverbindung mit dem ersten Einlass der Anodenkammer und dem zweiten Einlass der Kathodenkammer steht; und zur Bildung eines geschlossenen Wasserzirkulationssystems steht
der erste Auslass der Anodenkammer über ein Rohr (6), das durch das geschlossene Ende der jeweiligen Kartusche (8) verläuft, in Fluidverbindung mit der Kartuschenkammer einer der Kartuschen (8), und
der zweite Auslass der Kathodenkammer über ein Rohr (4), das durch das geschlossene Ende der jeweiligen Kartusche (11) verläuft, in Fluidverbindung mit der Kartuschenkammer der anderen der Kartuschen (11);
wobei jede der Kartuschen (8, 11) so ausgelegt ist, dass sie im Betrieb entweder gasförmigen Wasserstoff oder gasförmigen Sauerstoff, der vom Elektrolyseur erzeugt wird, gegen den hydrostatischen Druck des Grundwassers (9) mit einem Druck von im jeweiligen Brunnen (5, 7) speichert.

2. Speichersystem nach Anspruch 1, **dadurch gekennzeichnet, dass** die Energiequelle eine alternative Energiequelle ist, die aus einer Gruppe ausgewählt ist, die aus Solarkraftwerken, Geothermiekraftwerken, Windparks und Biomassekraftwerken besteht.

3. Speichersystem nach einem der Ansprüche 1 bis 2, **dadurch gekennzeichnet, dass** der Brunnen (5, 7) ein Bohrbrunnen oder ein Schachtbrunnen ist.

4. Speichersystem nach einem der Ansprüche 1 bis 3, **dadurch gekennzeichnet, dass** jedes Rohr (4, 6), das durch das geschlossene Ende der Kartusche (11, 8) verläuft, innerhalb der Kartusche (11, 8) mit einer Querschnittsvergrößerung ausgebildet ist, um zu ermöglichen, dass gasförmiger Wasserstoff und/oder Sauerstoff in der jeweiligen Kartusche (11, 8) unterhalb des Grundwasserspiegels (9) im jeweiligen Brunnen (5, 7) eingefangen werden können.

## Revendications

1. Système de stockage souterrain de gaz, en particulier d'hydrogène et/ou d'oxygène, le système comprenant :
- une source d'énergie ;
- un électrolyseur destiné à l'électrolyse de l'eau en utilisant l'énergie de ladite source d'énergie, l'électrolyseur comportant deux chambres, une chambre anodique et une chambre cathodique,
la chambre anodique étant configurée pour héberger la réaction d'oxydation de l'eau, y produisant ainsi de l'oxygène, et étant équipée d'une première entrée et d'une première sortie ;
la chambre cathodique étant configurée pour héberger la réaction de réduction de l'eau, y produisant ainsi de l'hydrogène, et étant équipée d'une deuxième entrée et d'une deuxième sortie ;
- au moins deux puits (5, 7), chacun desdits puits (5, 7) comprenant
un intérieur rempli d'eau souterraine (9) jusqu'à un niveau d'eau souterraine (9), et
une cartouche (11, 8) comportant une extrémité fermée, une extrémité ouverte opposée à l'extrémité fermée et un côté fermé s'étendant entre lesdites extrémités, le côté et les extrémités formant une chambre de cartouche ;
ladite cartouche (11, 8) étant fixée à l'intérieur du puits (5, 7) sous le niveau d'eau souterraine (9) dans une position dans laquelle l'extrémité fermée est située plus près du niveau d'eau souterraine (9) que de l'extrémité ouverte ;
- une pompe de circulation (2) comportant une entrée de pompe et une sortie de pompe, ladite entrée de pompe étant en communication fluidique avec l'intérieur de l'un des puits (5, 7) par l'intermédiaire d'un tuyau (10) se terminant sous le niveau d'eau souterraine (9), ladite sortie de pompe étant en communication fluidique avec la première entrée de ladite chambre anodique et la deuxième entrée de ladite chambre cathodique par l'intermédiaire d'un tuyau (3) ; et pour former un système de circulation d'eau fermé,
la première sortie de ladite chambre anodique est en communication fluidique avec la chambre de cartouche de l'une desdites cartouches (8) par l'intermédiaire d'un tuyau (6) traversant l'extrémité fermée de la cartouche respective (8), et
la deuxième sortie de ladite chambre cathodique est en communication fluidique avec la chambre de cartouche de l'autre desdites cartouches (11) par l'intermédiaire d'un tuyau (4) traversant l'extrémité fermée de la cartouche respective (11) ;
dans lequel chacune des cartouches (8, 11) est configurée pour stocker l'un parmi l'hydrogène gazeux et l'oxygène gazeux produits par l'électrolyseur, en cours d'utilisation, contre une pression hydrostatique d'eau souterraine (9) dans le puits respectif (5, 7).

2. Système de stockage selon la revendication 1, **caractérisé en ce que** la source d'énergie est une source d'énergie alternative choisie parmi un groupe comprenant les centrales solaires, les centrales géothermiques, les parcs éoliens et les centrales à biomasse.

3. Système de stockage selon l'une quelconque des revendications 1 à 2, **caractérisé en ce que** le puits (5, 7) est un puits foré ou un puits creusé.

4. Système de stockage selon l'une quelconque des revendications 1 à 3, **caractérisé en ce que** chaque tuyau (4, 6) traversant l'extrémité fermée de la cartouche (11, 8) présente une augmentation de section transversale à l'intérieur de la cartouche (11, 8) de manière à permettre à l'un quelconque de l'hydrogène gazeux et de l'oxygène gazeux d'être piégé dans la cartouche respective (11, 8) sous le niveau d'eau souterraine (9) dans le puits (5, 7) respectif.
